# FASCICULE DE BREVET EUROPEEN

(11) **EP 0 601 033 B1**
(45) Date de publication et mention de la délivrance du brevet: **03.01.1996**
(21) Numéro de dépôt: 92918542.9
(22) Date de dépôt: 19.08.1992
(51) Int. Cl.: G09B 9/04

(54) **DISPOSITIF POUR SIMULER DES DERAPAGES AVEC UN VEHICULE A TRACTION AVANT**
EINRICHTUNG ZUR SIMULATION DES RUTSCHENS EINES FRONTANGETRIEBENEN FAHRZEUGS.
SKID-SIMULATING DEVICE FOR A FRONT WHEEL DRIVE VEHICLE

(30) Priorité: 22.08.1991 FR 9110619
(43) Date de publication de la demande: 15.06.1994
(73) Titulaire: GERBER, Gaston, F-68100 Mulhouse (FR)
(72) Inventeur: GERBER, Gaston, F-68100 Mulhouse (FR)
(74) Mandataire: Nithardt, Roland
(86) Numéro de dépôt international: FR9200801
(87) Numéro de publication internationale: WO9304454

(56) Documents cités:
- WO-A-89/01678
- BE-A- 738 903
- CH-A- 202 994
- FR-A- 422 187
- FR-A- 695 455
- FR-A- 1 372 443
- FR-A- 2 642 876
- Revue Technique Automobile, vol. 45, no. 522, décembre 1990, page XXI, (Boulogne-Billancourt, FR), "Des patins a roulettes pour ranger les voitures", voir en entier (citée dans la demande)

## Description

La présente invention concerne un dispositif de simulation de dérapage pour un véhicule automobile à traction avant avec moteur en marche, agencé pour porter les roues arrières du véhicule, sans démontage desdites roues, et pour créer une perte d'adhérence entre ces roues et le sol, cette perte d'adhérence étant similaire à celle rencontrée en cas de chaussées mouillées ou verglacées, ce dispositif comportant des moyens de roulement agencés pour s'interposer entre lesdites roues arrières du véhicule et le sol, et pour rouler sur le sol en supportant la partie arrière du véhicule.

L'évolution de l'apprentissage de la conduite des automobiles au niveau des établissements d'enseignement de la conduite, ainsi que le perfectionnement des conducteurs, impliquent une formation toujours plus complète, englobant notamment l'étude du phénomène le plus déconcertant pour l'automobiliste : le dérapage sur les chaussées glissantes, par exemple en présence d'eau ou de boue, de neige, de verglas, de feuilles mortes, de gravillons, de flaques d'huile, etc. Jusqu'à présent, on a utilisé généralement des installations spécifiques à cet usage, ayant un revêtement lisse et abondamment arrosé. Toutefois, ces installations sont coûteuses et de plus obligent l'emploi de véhicules spécialement adaptés, modifiés, et inutilisables en d'autres lieux.

Plusieurs documents tels que le brevet suisse CH-A-202 994, l'article dans la Revue Technique Automobile (vol.45, no. 552, décembre 1990) "Des patins à roulettes pour ranger les voitures" et le brevet belge BE-A-738 903 décrivent des dispositifs amovibles pour déplacer une voiture en stationnement et comportant des supports roulants à disposer sous les roues de ladite voiture. Ces supports roulants ont généralement la forme d'un sabot pour caler la roue, monté sur quatre roulettes pivotantes et équipé d'une rampe d'accès en pente. La construction de ces dispositifs est uniquement adaptée au déplacement d'une voiture en stationnement et ne peut pas être adaptée à la simulation et aux tests de dérapages, comme le prévoit la présente invention.

Pour permettre de simuler des dérapages avec un véhicule à traction avant, on connaît des dispositifs, tels que décrits dans la demande internationale de brevet WO-A-8 901 678, qui décrit un dispositif selon le préambule de la revendication 1, qui nécessitent de démonter les roues arrière du véhicule et de remonter à leur place un appareil comportant une roue unique qui supporte l'arrière du véhicule et qui s'oriente librement par pivotement autour d'un axe vertical. Toutefois ce dispositif présente certains inconvénients quant à son fonctionnement et sa facilité de montage. Le véhicule est nécessairement surélevé à l'arrière, ce qui détermine un transfert de poids vers les roues avant. La mise en place de l'appareil demande du temps, puisqu'il faut démonter les deux roues arrières pour fixer l'appareil sur les goujons portant celles-ci. De plus, il faut prévoir des systèmes de fixation différents pour les différents types de véhicules, en particulier à cause des différences dans la disposition et le nombre des goujons sur les moyeux de roues.

D'autres dispositifs de simulation de dérapage, décrits dans la demande de brevet français FR-A-2 642 876, sont constitués par un dispositif d'appui à roulette pivotante, monté en permanence sur le châssis de la voiture, à proximité des roues arrière, et escamotable à distance par une commande pneumatique. Là encore, l'installation dudit dispositif nécessite une transformation relativement compliquée et coûteuse sur le véhicule, et ne garantit pas les meilleures conditions de sécurité et d'efficacité pour réaliser des tests de dérapage en situation réelle.

La présente invention a pour but d'éviter les inconvénients précités, grâce à un dispositif pouvant être installé d'une manière aussi simple que possible et sans aucun démontage d'éléments du véhicule. Un but secondaire consiste à agencer le dispositif de façon à ne pas modifier sensiblement la répartition des charges entre l'essieu avant et l'essieu arrière.

Dans ce but, le dispositif selon l'invention est caractérisé en ce que les moyens de roulement sont indépendants du véhicule et comportent des moyens de support agencés pour porter individuellement chaque roue arrière de ce véhicule et pourvus de roulettes orientables, et des moyens d'arrêt agencés pour solidariser lesdits moyens support respectivement avec la roue arrière qu'ils supportent, ces moyens d'arrêt étant constitués premièrement par des surfaces d'appui prévues dans les moyens de support et agencées pour coopérer respectivement avec une partie avant et une partie arrière de ladite roue, deuxièmement par une paire de guides longitudinaux solidaires des moyens de support, s'étendant le long des flancs de la roue, au moins l'un de ces guides étant réglable latéralement de manière à coopérer étroitement avec lesdits flancs droit et gauche de la même roue, et troisièmement par des butées verticales solidaires des moyens de support et disposées en avant et en arrière de ladite roue.

Dans une forme de réalisation préférée, les moyens de support comportent des berceaux longitudinaux concaves vers le haut, situés à proximité du sol et présentant chacun, en regard de la bande de roulement de la roue, au moins deux surfaces d'appui qui convergent vers le bas.

Dans une autre forme de réalisation, les moyens de support comportent pour chaque roue au moins deux supports agencés pour supporter la roue par appui contre des zones respectives de la bande de roulement de la roue, ces zones se trouvant respectivement en avant et en arrière d'une verticale passant par l'axe de la roue.

Chaque chariot comporte de préférence un châssis ayant en plan une forme en U, comprenant deux traverses reliées par un longeron. Chaque chariot peut comporter au moins deux roulettes orientables, ou de préférence quatre roulettes orientables, lesquelles sont disposées à proximité des extrémités des traverses. Un tel chariot peut comporter deux berceaux longitudinaux parallèles, dont l'un au moins est supporté par les traverses à ses extrémités dans une position réglable transversalement pour ajuster l'écartement des deux berceaux.

Les roulettes peuvent être orientables par pivotement autour d'un axe vertical, de façon à permettre une égale facilité de déplacement dans toutes les directions, ou par pivotement autour d'un axe présentant une inclinaison vers l'avant par rapport à la verticale, de façon à avoir tendance à s'orienter dans la direction normale de marche du véhicule.

La présente invention et ses avantages seront mieux compris à l'aide de la description suivante d'une forme de réalisation préférée, en référence aux dessins annexés, dans lesquels :
- la figure 1 représente la face extérieure d'une roue arrière d'un véhicule automobile, reposant sur le dispositif selon l'invention,
- la figure 2 est une vue en plan d'un des chariots du dispositif, et
- la figure 3 est une vue en élévation de l'arrière de ce chariot.

Dans sa forme préférée, le dispositif selon l'invention se compose de deux chariots identiques 1, dont un seul est représenté dans le dessin et dont chacun est destiné à supporter l'une des roues arrières 2 d'un véhicule à traction avant. Par le terme de roue, on entend ici englobé également le pneu et un éventuel enjoliveur, c'est-à-dire que la roue repose sur le chariot 1 sans subir aucune modification par rapport à son état de marche. Le chariot 1 comporte un châssis métallique horizontal comprenant deux courtes traverses 3 et un longeron 4 dont les extrémités sont soudées aux traverses près des extrémités de celles-ci, de sorte que le châssis a en plan, une forme en U. Deux, trois ou quatre roulettes orientables 5 à axe de pivotement vertical 6 sont montées au-dessous des extrémités des traverses 3. Une jupe en caoutchouc 7, représentée symboliquement en traits interrompus afin de clarifier le dessin, peut être fixée sur un ou plusieurs côtés du châssis afin de le masquer.

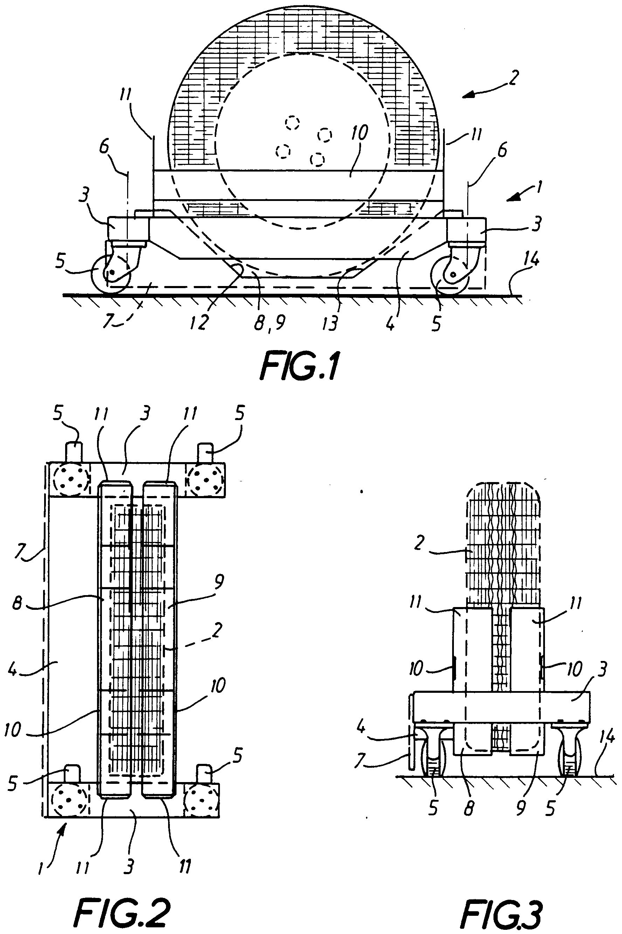

Sur ce châssis sont fixés deux berceaux longitudinaux de support 8 et 9 agencés pour supporter ensemble la roue 2. Les extrémités des deux berceaux reposent sur les traverses 3. Dans cet exemple, le berceau 8 est fixe et le berceau 9 est réglable en position de façon qu'on puisse ajuster l'écartement entre les deux berceaux pour l'adapter à la largeur de la roue. On peut aussi prévoir que les deux berceaux soient réglables. Pour garantir que la roue ne puisse pas s'échapper du chariot, chaque berceau est pourvu d'un guide latéral 10 et d'une paire de butées 11 à l'avant et à l'arrière. La figure 1 montre que chacun des berceaux 8,9 a un profil concave vers le haut, présentant notamment deux surfaces d'appui 12 et 13 inclinées dans des sens opposés, pour s'appuyer contre la bande de roulement du pneu de façon à le bloquer longitudinalement dans les deux sens. En outre, la forme surbaissée des berceaux 8,9 leur permet de supporter la roue à un niveau très proche du sol, de sorte que la partie arrière du véhicule n'est surélevée que de quelques centimètres par rapport à sa position normale.

Pour installer le dispositif, il suffit de soulever l'arrière du véhicule, de placer les chariots 1 sous les roues arrière et d'abaisser ensuite le véhicule. Comme les roulettes 4 peuvent pivoter librement à 360° autour de leurs axes verticaux 6, elles simulent un manque total d'adhérence de l'essieu arrière, notamment sous l'effet d'un effort latéral. Le longeron 4 disposé le long de la face extérieure de la roue, ainsi que la jupe 7, font office de pare-choc évitant une détérioration de l'appareil s'il bute contre un obstacle.

La présente invention n'est pas limitée à l'exemple de réalisation décrit ci-dessus, mais elle s'étend à toute modification ou variante évidente pour un homme du métier. En particulier, les berceaux 8, 9 pourraient être remplacés par une paire de supports s'étendant transversalement et s'appuyant contre deux zones inclinées de la bande de roulement du pneu ou pourraient avoir la forme d'un demi-cercle épousant exactement le profil du pneu. D'autre part, les axes de pivotement 6 des roulettes ne sont pas nécessairement verticaux : s'ils sont légèrement inclinés vers l'avant, le poids agissant sur les roulettes aura tendance à les rappeler vers une position parallèle à l'axe longitudinal du véhicule, donc à opposer une certaine résistance au dérapage latéral.

Au lieu de deux chariots indépendants, on peut aussi envisager d'utiliser des chariots s'emboîtant latéralement sur les roues et reliés entre eux par deux barres transversales démontables.

## Revendications

1. Dispositif de simulation de dérapage pour un véhicule automobile à traction avant avec moteur en marche, agencé pour porter les roues arrières du véhicule, sans démontage desdites roues, et pour créer une perte d'adhérence entre ces roues et le sol, cette perte d'adhérence étant similaire à celle rencontrée en cas de chaussées mouillées ou verglacées, ce dispositif comportant des moyens de roulement agencés pour s'interposer entre lesdites roues arrières du véhicule et le sol, et pour rouler sur le sol en supportant la partie arrière du véhicule, caractérisé en ce que les moyens de roulement sont indépendants du véhicule et comportent des moyens de support (3, 4, 8, 9) agencés pour porter individuellement chaque roue arrière (2) de ce véhicule et pourvus de roulettes orientables (5), et des moyens d'arrêt (10, 11, 12, 13) agencés pour solidariser lesdits moyens de support respectivement avec la roue arrière qu'ils supportent, ces moyens d'arrêt étant constitués premièrement par des surfaces d'appui (12, 13) prévues dans les moyens de support et agencées pour coopérer respectivement avec une partie avant et une partie arrière de ladite roue, deuxièmement par une paire de guides longitudinaux (10) solidaires des moyens de support, s'étendant le long des flancs de la roue, au moins l'un de ces guides étant réglable latéralement de manière à coopérer étroitement avec lesdits flancs droit et gauche de la même roue, et troisièmement par des butées verticales (11) solidaires des moyens de support et disposées en avant et en arrière de ladite roue.

2. Dispositif selon la revendication 1, caractérisé en ce que les moyens de support comportent des berceaux longitudinaux (8, 9) concaves vers le haut situés à proximité du sol (14) et présentant chacun, en regard de la bande de roulement de la roue (2), au moins deux surfaces d'appui (12, 13) qui convergent vers le bas.

3. Dispositif selon la revendication 1, caractérisé en ce que les moyens de support comportent pour chaque roue au moins deux supports agencés pour supporter la roue (2) par appui contre des zones respectives de la bande de roulement de la roue, ces zones de trouvant respectivement en avant et en arrière d'une verticale passant par l'axe de la roue.

4. Dispositif selon l'une des revendications précédentes, caractérisé en ce que les moyens de roulement comportent deux chariots (1) dont chacun est agencé pour supporter une des roues (2).

5. Dispositif selon la revendication 4, caractérisé en ce que chaque chariot (1) comporte un châssis ayant en plan une forme en U, comprenant deux traverses (3) reliées par un longeron (4).

6. Dispositif selon la revendication 5, caractérisé en ce que chaque chariot comporte au moins deux roulettes orientables.

7. Dispositif selon la revendication 5, caractérisé en ce que chaque chariot comporte quatre roulettes orientables et en ce que ces roulettes sont respectivement disposées aux extrémités des traverses (3).

8. Dispositif selon les revendications 2 et 5, caractérisé en ce que chaque chariot comporte deux berceaux longitudinaux parallèles (8, 9), dont l'un au moins (9) est supporté par les traverses (3) à ses extrémités dans une position réglable transversalement pour ajuster l'écartement des deux berceaux en fonction de la largeur de la roue, et en ce que ces deux berceaux sont maintenus en position par le poids de la partie arrière du véhicule qu'ils portent.

9. Dispositif selon la revendication 1, caractérisé en ce que les roulettes (5) sont orientables par pivotement autour d'un axe vertical (6).

10. Dispositif selon la revendication 1, caractérisé en ce que les roulettes (5) sont orientables par pivotement autour d'un axe présentant une inclinaison vers l'avant par rapport à la verticale.

## Patentansprüche

1. Einrichtung zur Simulation des Rutschens eines frontangetriebenen Fahrzeugs mit laufendem Motor, die so eingerichtet ist, daß sie die Hinterräder des Fahrzeugs trägt, ohne daß diese abmontiert werden müssen, und einen Haftungsverlust zwischen Rädern und Boden herbeiführt, wie er bei nasser oder vereister Straße entsteht. Diese Vorrichtung enthält Rollvorrichtungen, die sich zwischen die besagten Hinterräder des Fahrzeugs und den Boden zu schieben und auf dem Boden zu rollen, wobei die hintere Partie des Fahrzeugs getragen wird, gekennzeichnet dadurch, daß diese Rollvorrichtungen unabhängig vom Fahrzeug sind und Tragvorrichtungen (3, 4, 8, 9) enthalten, die jedes Hinterrad (2) des Fahrzeugs einzeln tragen und mit drehbaren Rollen (5) und Blockiervorrichtungen (10, 11, 12, 13) versehen sind, die die besagten Haltevorrichtungen jeweils mit dem Hinterrad, das sie tragen, verbinden. Diese Blockiervorrichtungen bestehen erstens aus Auflageflächen (12, 13), die in den Tragvorrichtungen vorgesehen und so angeordnet sind, daß sie jeweils mit einer vorderen und hinteren Partie des besagten Rades zusammenwirken, zweitens aus einem Paar länglicher Führungen (10), die fest mit den Tragvorrichtungen verbunden sind und sich entlang der Radflanken erstrecken, wobei mindestens eine dieser Führungen seitlich einstellbar ist, um direkt mit den besagten Flanken rechts und links des gleichen Rades zusammenzuwirken, und drittens, aus vertikalen Anschlägen (11), die fest mit den Tragvorrichtungen verbunden und vor und hinter dem besagten Rad angeordnet sind.

2. Vorrichtung gemäß Anspruch 1, gekennzeichnet dadurch, daß die Tragvorrichtungen längliche, nach oben konkave Lager (8, 9) enthalten, die in der Nähe des Bodens (14) liegen und in Bezug auf die Rollfläche des Rades (2) mindestens zwei Auflageflächen (12, 13) aufweisen, die nach unten zusammenlaufen.

3. Vorrichtung gemäß Anspruch 1, gekennzeichnet dadurch, daß die Tragvorrichtungen für jedes Rad mindestens zwei Träger enthalten, die das Rad (2) durch Aufliegen auf die jeweiligen Zonen der Rollfläche des Rades halten, wobei sich diese Zonen jeweils vor und hinter einer Vertikale durch die Radachse befinden.

4. Vorrichtung nach den oben genannten Patentansprüchen, gekennzeichnet dadurch, daß die Rollvorrichtungen zwei Wagen (1) enthalten, von denen jeder ein Rad (2) aufnimmt.

5. Vorrichtung gemäß Anspruch 4, gekennzeichnet dadurch, daß jeder Wagen (1) ein Traggestell in U-Form enthält, mit zwei Querbalken (3), verbunden durch einen Längsträger (4).

6. Vorrichtung gemäß Anspruch 5, gekennzeichnet dadurch, daß jeder Wagen mindestens zwei drehbare Rollen enthält.

7. Vorrichtung gemäß Anspruch 5, gekennzeichnet dadurch, daß jeder Wagen vier drehbare Rollen enthält und diese jeweils an den Enden der Querbalken (3) angeordnet sind.

8. Vorrichtung gemäß den Ansprüchen 2 und 5, gekennzeichnet dadurch, daß jeder Wagen zwei längliche parallele Lager (8, 9) enthält, von denen mindestens eines (9) von den Querbalken (3) an seinen Enden in einer transversal einstellbaren Position gehalten wird, um den Abstand der beiden Lager gemäß der Breite des Rades einstellen zu können, und dadurch daß die beiden Lager durch das Gewicht der hinteren Fahrzeugpartie, die sie tragen, in Position gehalten werden.

9. Vorrichtung gemäß Anspruch 1, gekennzeichnet dadurch, daß die Rollen (5) durch Drehen um eine vertikale Achse (6) orientierbar sind.

10. Vorrichtung gemäß Anspruch 1, gekennzeichnet dadurch, daß die Rollen (5) durch Drehen um eine Achse orientierbar sind, die eine Neigung nach vorn im Verhältnis zur Vertikale aufweist.

## Claims

1. A skid-simulation device for front wheel drive vehicles with engine running, designed to support the rear wheels of vehicle without need for removal of these wheels and to create a loss of adhesion between these wheels and the ground, this loss of adhesion being similar to that encountered in cases of wet or icy road surfaces, comprising a roll facility designed to be placed between the said rear wheels of vehicle and ground and to roll along the ground while supporting the rear end of vehicle, characterised in that the roll facility is independent of vehicle, includes a means of support (3, 4, 8, 9) designed to support each rear wheel (2) of vehicle individually and is foreseen with swivel rollers (5) with blocking facility (10, 11, 12, 13) designed to block the said means of support respectively with the rear wheel that it supports, these means of blocking being composed firstly of pressure surfaces (12, 13) foreseen with the means of support and designed to interact respectively with front and rear surface points of said wheel, secondly of a pair of longitudinal guides (10) connected to the means of support, and positioned along side of wheel, one of these guides being laterally adjustable to provide a close contact with right and left side walls of said wheel, and thirdly of vertical stops (11) connected to the means of support and positioned in front of and behind said wheel.

2. Device according to claim 1, characterised in that the means of support is composed of upward-concave longitudinal beds (8, 9) located close to ground (14) and each presenting, in respect to roll surface of wheel (2), at least two pressure surfaces (12, 13) which converge downwards.

3. Device according to claim 1, characterised in that the means of support for each wheel is composed of at least two supports designed to support wheel (2) by pressing against the respective roll surfaces of wheel, these surfaces being respectively at front and rear of a vertical line passing through axis of wheel.

4. Device according to above mentioned claims, characterised in that the roll facility comprises two carriages (1) each of which is designed to support one wheel (2).

5. Device according to claim 4, characterised in that each carriage (1) is composed of a U-form frame comprising two cross members (3) linked by a lateral member (4).

6. Device according to claim 5, characterised in that each carriage comprises at least two swivel rollers.

7. Device according to claim 5, characterised in that each carriage comprises four swivel rollers and in that these rollers are respectively positioned at ends of cross-members (3).

8. Device according to claims 2 and 5, characterised in that each carriage comprises two parallel longitudinal beds (8, 9), of which at least one (9) is supported by the cross-members (3) at its ends in a position providing horizontal adjustment of gap between beds in accordance with width of wheel, and in that these two beds are held in position by the weight of rear end of vehicle they support.

9. Device according to claim 1, characterised in that rollers (5) swivel around a vertical axis (6).

10. Device according to claim 1, characterised in that rollers (5) swivel around a vertical axis which has a front-inclination in respect to vertical.
